# EUROPÄISCHE PATENTSCHRIFT

(11) **EP 1 303 698 B1**
(45) Veröffentlichungstag und Bekanntmachung des Hinweises auf die Patenterteilung: **01.03.2006**
(21) Anmeldenummer: 01962750.4
(22) Anmeldetag: 20.06.2001
(51) Int. Cl.: F03D 1/06

(54) **ROTORBLATTNABE**
ROTOR BLADE HUB
MOYEU DE PALE

(30) Priorität: 19.07.2000 DE 10034958
(43) Veröffentlichungstag der Anmeldung: 23.04.2003
(73) Patentinhaber: Wobben, Aloys, 26607 Aurich (DE)
(72) Erfinder: Wobben, Aloys, 26607 Aurich (DE)
(74) Vertreter: Eisenführ, Speiser & Partner
(86) Internationale Anmeldenummer: PCT/EP2001/006926
(87) Internationale Veröffentlichungsnummer: WO 2002/006667

(56) Entgegenhaltungen:
- EP-A- 0 690 228
- WO-A-01/42647
- RU-C- 2 078 250
- US-A- 4 304 524
- US-A- 4 352 633
- US-A- 4 755 106
- US-A- 4 790 722

## Beschreibung

Die vorliegende Erfindung betrifft eine Rotorblattnabe für eine Windenergieanlage. Eine solche Nabe stellt eine mechanische Verbindung zwischen der (horizontalen) Rotorwelle (Rotorachse) und den Rotorblättern her. Daraus folgt, dass sämtliche an den Rotorblättern auftretenden Kräfte, sofern sie nicht Kräfte in den Rotorblättern selbst sind, auch an der Nabe auftreten. Dies sind neben den (gewollten) Rotationskräften u. a. auch Fliehkräfte und sich aus der Windbeaufschlagung der Rotorblätter ergebende Kräfte, Lasten und Momente.

Die Rotornabe ist demnach eines der höchstbeanspruchten Teile einer Windenergieanlage und als Verbindung zwischen den Rotorblättern und dem "Rest der Anlage" das Element, dessen Festigkeit garantieren muss, dass sich kein Rotorblatt von der Anlage losreißen kann.

Daher werden Rotorblattnaben im Stand der Technik in den meisten Fällen als Ganzes aus einem Guss, vorzugsweise ein Stück aus Gusseisen mit Kugelgraphit hergestellt.

Aus der US 4,790,722 ist ein Mehrfachrotorblatt Rotor für eine Windenergieanlage offenbart, bei dem die Rotorblätter jeweils über Wälzlager mit der Rotomabe verbunden sind.

Aufgabe der vorliegenden Erfindung ist es daher, eine Rotorblattnabe anzugeben, die bei den erforderlichen Abmessungen allen Anforderungen für den sicheren Betrieb einer Windenergieanlage genügt und die einen sicheren und möglichst wenig aufwendigen Transport zum Aufbauort der Windenergieanlage gestattet.

Die in naher Zukunft zu errichtenden Anlagen erreichen solche Dimensionen, dass der erforderliche technische Ablauf zum einstückigen Herstellen einer Rotorblattnabe kaum noch beherrschbar ist und die Gefahr von Schwachstellen, z. B. in Form von Lunkem, beträchtlich steigt. Damit ist eine zuverlässige Fertigung einwandfreier Rotorblattnaben jedoch nicht mehr möglich.

Weiterhin ist zumindest ein Transport zu Lande von großen Rotorblattnaben mit entsprechenden Abmessungen nur mit großem (unverhältnismäßigem) Aufwand zu bewerkstelligen und erfordert außerordentlich umfangreiche logistische und organisatorische Vorbereitungen.

Erfindungsgemäß wird eine Rotorblattnabe mit den Merkmalen des Anspruches 1 und ein Verfahren zur Herstellung einer Rotorblattnabe mit den Merkmalen des Anspruches 6 vorgeschlagen. Die Erfindung schlägt vor, dass die Rotorblattnabe in mindestens zwei (Einzel) Stücken hergestellt wird und dass die Stücke dauerhaft zu einer Rotorblattnabe zusammengefügt werden. Die Stücke können daher so dimensioniert werden, dass ein Transport auch zu Lande mit Standard-Transportmitteln durchführbar ist.

In einer bevorzugten Ausführungsform der Erfindung ist die Anzahl der Einzelstücke der Rotorblattnabe wenigstens um Eins größer als die Zahl der Rotorblätter der Windenergieanlage. Die Einzelstücke weisen eine Größe auf, für welche die bekannten technischen Verfahren sicher beherrscht werden. Andererseits ist so eine Aufteilung der Rotorblattnabe in Einzelstücke derart möglich, dass die Art der Beanspruchung der einzelnen Teile besser berücksichtigt werden kann als bei der bisher bekannten Aufteilung der Rotorblattnabe als Gussteil.

Besonders bevorzugt erfolgt die Aufteilung der Rotorblattnabe in einen sogenannten Nabenkern und eine Anzahl von Nabenaußenteilen entsprechend der Anzahl der Rotorblätter. Dadurch kann jedes Rotorblatt mit einer Wurzel an einem Nabenaußenteil befestigt werden, wobei die Nabenaußenteile wiederum am Nabenkern angebracht werden, so dass die Beanspruchung der einzelnen Verbindungen klar definierbar ist.

In einer besonders bevorzugten Weiterbildung der Erfindung sind sowohl am Nabenkern als auch an den Nabenaußenteilen Befestigungsmittel vorgesehen, die eine dauerhafte Verbindung zwischen den Nabenaußenteilen und dem Nabenkern zulassen.

Diese dauerhafte Verbindung kann durch Schraub- oder Nietverbindungen geschaffen werden. Auch ein formschlüssiger Verbund (z.B. durch Schweißen, Kleben, Zusammenfügen von entsprechenden profilierten und aufeinander passenden Teilen (Kern und Außenteil) (oder eine Kombination vorgenannter Verbindungslösungen)) des Nabenkerns mit dem Außenteilen ist möglich, wobei darauf zu achten ist, dass stets für eine ausreichende feste Verbindung zwischen Nabenkern und Außenteil gesorgt ist.

Weitere bevorzugte Ausführungsformen der Erfindung sind durch die Merkmale der Unteransprüche beschrieben.

Im Folgenden wird eine mögliche Ausführungsform der Erfindung näher erläutert. Dabei zeigen:
- Fig. 1: eine Vorderansicht eines Nabenkerns und der davon getrennt dargestellten Nabenaußenteile;
- Fig. 2: eine Seitenansicht des Nabenkerns;
- Fig. 3: eine Seitenansicht eines Nabenaußenteils und
- Fig. 4: eine Seitenansicht einer Nabe.

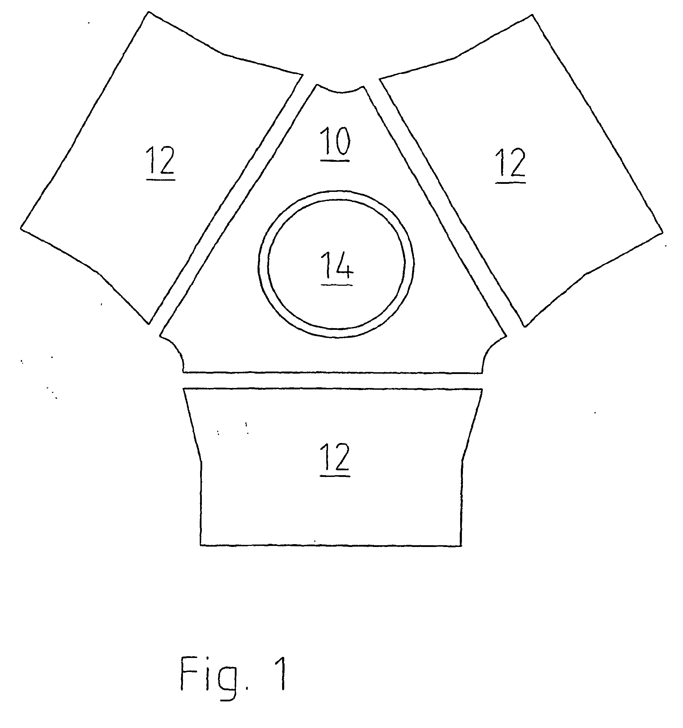

Fig. 1 zeigt einen (in der Ansicht von vorne im Wesentlichen dreiecksförmig ausgebildeten) Nabenkern 10 mit einer Buchse 14 zur Aufnahme der Achszapfens (nicht dargestellt). Mit dieser Buchse 14 wird die Rotorblattnabe auf die Rotorachse (z.B. den Achszapfen) aufgesetzt. Mit geringem Abstand von dem Nabenkern 10 sind drei Nabenaußenteile 12 dargestellt, die an dem Nabenkern 10 in der gezeigten Orientierung dauerhaft befestigt werden (und sind), und an denen wiederum die Rotorblätter (nicht dargestellt) in bekannter Weise befestigt werden. (siehe hierzu: Erich Hau "Windkraftanlagen")

Gemäß einer bevorzugten Ausführungsform der Erfindung ist in Fig. 1 eine Rotorblattnabe zur Aufnahme von drei Rotorblättern dargestellt. Demnach weist die Rotorblattnabe drei Nabenaußenteile auf, jeweils eines zum Anschluss eines Rotorblattes, sowie den Nabenkern 10 als viertes Einzelstück der Rotorblattnabe. Somit ist die Rotorblattnabe aus einer Anzahl von Einzelstücken gebildet (zusammengefügt), die um Eins größer ist als die Anzahl der (nicht dargestellten) Rotorblätter.

Um eine ausreichende Festigkeit des Materials zu erreichen, werden die Einzelstücke bevorzugt in einem Gießverfahren hergestellt und bestehen somit aus Gusseisen in einer geeigneten Zusammensetzung. Dabei weisen die Einzelstücke eine Größe auf, bei der das Herstellungsverfahren derselben sicher beherrschbar ist. Auf diese Weise kann sichergestellt werden, dass in Folge einwandfreier Einzelstücke auch die daraus hergestellten Rotorblattnaben die hohen Anforderungen sicher erfüllen.

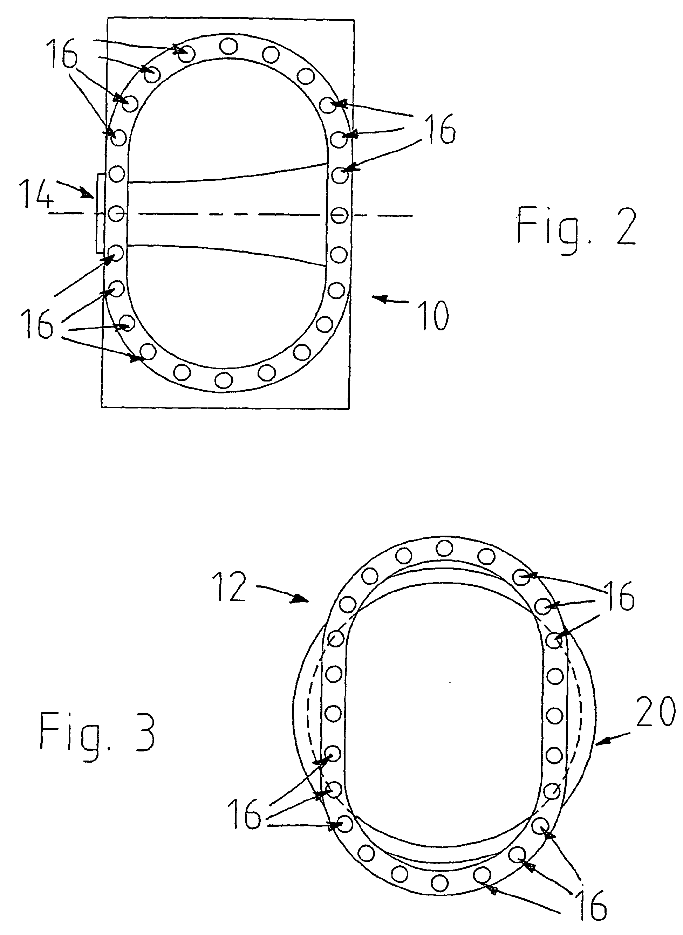

In Fig. 2 ist eine Seitenansicht des Nabenkerns 10 erkennbar. Dabei ist der Blick direkt auf einen im Wesentlichen oval geformten Befestigungsflansch (Aufnahme) mit Schraubenlöchern 16 zum Befestigen eines Nabenaußenteiles 12 an dem Nabenkern 10 gerichtet. Diese Schraubenlöcher 16 sind über den Flansch verteilt angeordnet und die Anzahl ist so bemessen, dass eine sichere Verbindung zwischen Nabenaußenteil 12 und Nabenkern 10 herstellbar ist. Weiterhin ist in Fig. 2 die durch die Öffnung im Nabenkern erkennbare Rotorachsenbuchse 14 (zur Anlage auf dem Achszapfen) dargestellt. Der Befestigungsflansch muss nicht zwingend oval geformt sein, er kann auch kreisrund oder als Polygon ausgeführt sein.

Fig. 3 zeigt eine Ansicht eines Nabenaußenteils 12 von der Seite her, die nach der Montage der Rotorblattnabe 10, 12, 14 am Flansch des Nabenkerns 10 anliegt. Auch an diesem Nabenaußenteil 12 ist ein im Wesentliche oval geformter Befestigungsflansch mit Öffnungen 16 vorgesehen. Dabei entsprechen Anzahl und Position der Schraubenlöcher 16 denjenigen des Nabenkerns 10, so dass sich diese bei einer Montage exakt gegenüberliegen.

Weiterhin ist in Fig. 3 eine möglicher, im Wesentlichen kreisförmiger Rotorblattanschluss des Nabenaußenteils 12 angedeutet. Um die Übersichtlichkeit der Figur zu erhalten, wurde hier auf die Darstellung von Befestigungsmittel verzichtet.

Zur Montage der Rotorblattnabe werden die Nabenaußenteile 1 2 an den Nabenkern 10 angelegt und sobald das Nabenaußenteil 12 die richtige Position gegenüber dem Nabenkern 10 aufweist, werden die Einzelstücke 10, 12 dauerhaft miteinander verbunden, indem sie z.B. miteinander verschraubt werden. Dabei sind jedoch alle bekannten technischen Verfahren zum Verbinden solcher Einzelstücke möglich, wobei auch unlösbare Verbindungstechniken, z.B. Schweißen, Verkleben, in Betracht zu ziehen sind.

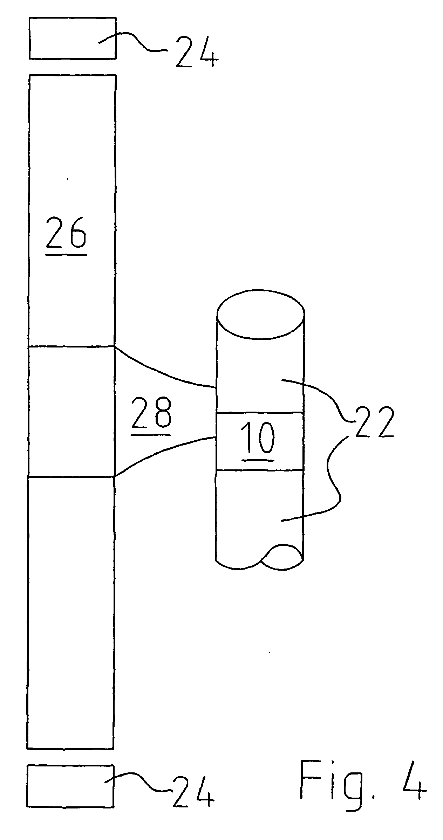

Fig. 4 zeigt im Ausriss die Darstellung einer Windenergieanlage mit einer Rotorblattnabe, die drei Rotorblätter aufnimmt. Die Rotorblattnabe ist am Läufer eines Generators direkt befestigt und der Läufer dreht sich innerhalb des Stators des Generators. Sowie Nabe als auch der Läufer sind auf einem Achszapfen drehbar gelagert.

Bei der dargestellten Windenergieanlage handelt es sich bevorzugt um eine Windenergieanlage mit sehr großer Leistung, vorzugsweise mit mehr als drei MW. Die zusammengesetzte Nabe weist einen Durchmesser von mehr als 2,50 m (aus der Ansicht, wie in Fig. 1 dargestellt) auf.

## Patentansprüche

1. Rotorblattnabe (10, 12, 14)für einen Rotor mit wenigstens einem Rotorblatt, gebildet aus einem Nabenkern (10) und ein oder mehreren Nabenaußenteilen (12) zur Aufnahme eines Rotorblatts,
**dadurch gekennzeichnet, dass** der Nabenkern (10) wie auch das Nabenaußenteil (12) einen im Wesentlichen oval gebildeten Flansch aufweisen, durch den Nabenaußenteil und Nabenkern miteinander verbunden sind.

2. Rotorblattnabe nach Anspruch 1,
**dadurch gekennzeichnet, dass** die Anzahl der Einzelstücke der Rotorblattnabe (10, 12, 14) um wenigstens Eins größer ist als die Anzahl der Rotorblätter, welche die Nabe aufnehmen kann.

3. Rotorblattnabe nach Anspruch 1 oder 2,
**dadurch gekennzeichnet, dass** die Rotorblattnabe (10, 12, 14) durch einen Nabenkern (10) und ein oder mehrere Nabenaußenteile (12) zur Aufnahme eines Rotorblatts gebildet ist.

4. Rotorblattnabe nach einem der vorstehenden Ansprüche,
**dadurch gekennzeichnet, dass** der Nabenkern (10) und die Nabenaußenteile (12) dauerhaft und/oder unlösbar miteinander verbunden sind.

5. Rotorblattnabe nach einem der Ansprüche 1 bis 4,
**dadurch gekennzeichnet, dass** der Nabenkern zur Aufnahme eines Nabenaußenteils (12) einen im Wesentlichen oval gebildeten Flansch aufweist.

6. Verfahren zur Herstellung einer Rotorblattnabe (10, 12, 14) aus wenigstens zwei Einzelstücken, die zur Bildung der Nabe zusammengesetzt und bevorzugt dauerhaft zusammengefügt werden,
**dadurch gekennzeichnet, dass** ein Nabenkern (10) wie auch mindestens ein Nabenaußenteil (12) einen im Wesentlichen oval gebildeten Flansch aufweisen, durch den Nabenaußenteil und Nabenkern miteinander verbunden werden.

7. Windenergieanlage mit einer Rotorblattnabe nach einem der Ansprüche 1 bis 5.

## Claims

1. A rotor-blade hub (10, 12, 14) for a rotor having at least one rotor blade, formed from a hub core (10) and one or more outer hub parts (12) for receiving a rotor blade, **characterized in that** the hub core (10) and the outer hub part (12) have a flange which is made substantially oval and by which the outer hub part and the hub core are connected to each other.

2. A rotor-blade hub according to Claim 1, **characterized in that** the number of the individual pieces of the rotor-blade hub (10, 12, 14) is at least one greater than the number of the rotor blades which the hub can receive.

3. A rotor-blade hub according to Claim 1 or 2, **characterized in that** the rotor-blade hub (10, 12, 14) is formed by a hub core (10) and one or more outer hub parts (12) for receiving a rotor blade.

4. A rotor-blade hub according to any one of the preceding Claims, **characterized in that** the hub core (10) and the outer hub parts (12) are connected to one another in a permanent and/or non-releasable manner.

5. A rotor-blade hub according to any one of Claims 1 to 4, **characterized in that** the hub core has a flange made substantially oval for receiving an outer hub part (12).

6. A method of producing a rotor-blade hub (10, 12, 14) from at least two individual pieces which are brought together in order to form the hub and which are preferably joined in a permanent manner, **characterized in that** a hub core (10) and at least one outer hub part (12) have a flange which is made substantially oval and by which the outer hub part and the hub core are connected to each other.

7. A wind power station with a rotor-blade hub according to any one of Claims 1 to 5.

## Revendications

1. Moyeu de pale de rotor (10, 12, 14) pour un rotor comprenant au moins une pale de rotor formée d'un noyau de moyeu (10) et d'une ou de plusieurs pièces extérieures de moyeu (12) pour recevoir une pale de rotor,
**caractérisé en ce que** le noyau de moyeu (10) ainsi que la pièce extérieure de moyeu (12) présentent une bride de forme essentiellement ovale via laquelle la pièce extérieure de moyeu et le noyau de moyeu sont reliés entre eux.

2. Moyeu de pale de rotor selon la revendication 1, **caractérisé en ce que** le nombre de pièces individuelles du moyeu de pale de rotor (10, 12, 14) est plus grand d'au moins un que le nombre de pales de rotor que le moyeu peut recevoir.

3. Moyeu de pale de rotor selon la revendication 1 ou 2, **caractérisé en ce que** le moyeu de pale de rotor (10, 12, 14) est formé par un noyau de moyeu (10) et d'une ou de plusieurs pièces extérieures de moyeu (12) pour recevoir une pale de rotor.

4. Moyeu de pale de rotor selon l'une des revendications précédentes, **caractérisé en ce que** le noyau de moyeu (10) et les pièces extérieures de moyeu (12) sont reliés entre eux de manière durable et/ou non détachable.

5. Moyeu de pale de rotor selon l'une des revendications 1 à 4,
**caractérisé en ce que** le noyau de moyeu présente une bride de forme essentiellement ovale pour réceptionner une pièce extérieure de moyeu (12).

6. Procédé de fabrication d'un moyeu de pale de rotor (10, 12, 14) comprenant au moins deux pièces individuelles qui sont montées ensemble pour former le moyeu et de préférence assemblées de manière durable, **caractérisé en ce qu'**un noyau de moyeu (10) ainsi qu'aussi au moins une pièce extérieure de moyeu (12) présentent une bride de forme essentiellement ovale via laquelle la pièce extérieure de moyeu et le noyau de moyeu sont reliés entre eux.

7. Installation d'énergie éolienne comportant un moyeu de pale de rotor selon l'une des revendications 1 à 5.
